(19) **Europäisches Patentamt / European Patent Office / Office européen des brevets**

(11) **EP 4 152 043 A1**

(12) **EUROPEAN PATENT APPLICATION**

(43) Date of publication:
**22.03.2023 Bulletin 2023/12**

(21) Application number: **21198012.3**

(22) Date of filing: **21.09.2021**

(51) International Patent Classification (IPC):
**G01S 7/35** $^{(2006.01)}$     **G01S 13/34** $^{(2006.01)}$

(52) Cooperative Patent Classification (CPC):
**G01S 7/354; G01S 13/343;** G01S 13/90

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Infineon Technologies AG**
**85579 Neubiberg (DE)**

(72) Inventors:
• **OLOUMI, Daniel**
  **9500 Villach (AT)**
• **MOEIN, Movafagh**
  **6516798353 Tehran (IR)**
• **SANTRA, Avik**
  **81541 München (DE)**

(74) Representative: **Sticht, Andreas**
**Kraus & Weisert**
**Patentanwälte PartGmbB**
**Thomas-Wimmer-Ring 15**
**80539 München (DE)**

(54) **SYNTHETIC APERTURE RADAR DEVICE AND METHOD**

(57)    A synthetic aperture radar device (10) is provided.

Received radar signals are mixed with signals to be transmitted by a mixer (18). The mixed signal is converted to a stream of digital samples, upsampled and multiplied with a function based on a frequency modulation of the transmitted FMCW signal. Subsequently, matched filtering and synthetic aperture radar processing is applied.

Fig. 1

EP 4 152 043 A1

**Description**

TECHNICAL FIELD

The present application relates to synthetic aperture radar devices and to corresponding methods.

Synthetic aperture radar (SAR) is a form of radar that may be used to create two-dimensional images or three-dimensional reconstructions of object. Essentially, SAR uses a moving antenna arrangement for transmitting and receiving radar signals to transmit and receive radar signals at different positions over time, wherein the final image is reconstructed based on the received radar signals. Instead of an actually moving antenna arrangement, also a plurality of spatially separate antennas used sequentially may be employed.

SAR devices may use pulsed radar signals. As an alternative to pulsed radar signals, the use of frequency modulated continuous wave (FMCW) radar signals for SAR devices has been proposed to present a high resolution imaging, for example in J. W. Ting, D. Oloumi and K. Rambabu, "FMCW SAR System for near-distance imaging applications - practical considerations and calibrations", IEEE Transactions on Microwave Theory and Techniques, Vol. 66, No. 1, PP. 450-461, 2017.

FMCW-SAR devices may provide a high range resolution and may be a cheaper alternative than pulsed SAR devices as they require lower transmitted power.

Generally, FMCW radars use frequency modulated radar signals, typically in the form of so-called radar chirps with (linear) increasing frequency. For processing received radar signals, often a so called stretch processing architecture is used, where the received radar signal is mixed with the radar signal to be transmitted from a transmit path for demodulation. However, the stretch processing architecture usually does not achieve an optimal signal-to-noise ratio.

The so-called matched filter architecture provides a better signal-to-noise ratio. Here, the received signal is demodulated by mixing with a carrier frequency, digitized and then filtered using a matched filter. However, to employ this approach, generally a high sampling rate of a digital-to-analog converter used is required to capture the received FMCW radar signal.

SUMMARY

A synthetic aperture radar device as defined in claim 1 and a method as defined in claim 8 are provided. The dependent claims define further embodiments.

According to an embodiment, a synthetic aperture radar, SAR, device is provided, comprising:

> a transmit path configured to transmit a frequency modulated continuous wave, FMCW, radar signal, and
> a receive path comprising:

>> an antenna arrangement including an output configured to provide a received radar signal,
>> a mixer, wherein a first input of the mixer is coupled to the output of the antenna arrangement and a second input of the mixer is coupled to the transmit path to receive the FMCW radar signal to be transmitted,
>> an analog-to-digital converter, wherein an input of the analog-to-digital converter is coupled to an output of the mixer, and configured to provide a stream of digital samples, and
>> digital processing circuitry comprising:

>>> an upsampling function configured to upsample the stream of digital samples,
>>> a multiplication function configured to multiply the upsampled stream of digital samples with a function representing a frequency modulation of the FMCW radar signal to be transmitted to provide a reconstructed version of the received radar signal,
>>> a matched filter function configured to provide matched filtering of the reconstructed signal, and
>>> a SAR processing function configured to perform SAR processing on the matched filtered reconstructed signal.

According to another embodiment, a method is provided, comprising:

> receiving a frequency modulated continuous wave, FMCW, radar signal,
> mixing the received FMCW radar signal with an FMCW radar signal to be transmitted from a transmit path to provide a mixed signal,
> converting the mixed signal to a stream of digital samples, upsampling the stream of digital samples,
> multiplying the upsampled stream of digital samples with a function representing a frequency modulation of the FMCW radar signal to be transmitted to provide a reconstructed signal,

matched filtering of the reconstructed signal; and synthetic aperture radar processing of the matched filtered reconstructed signal.

The above summary is merely intended to give a brief overview over some embodiments and is not to be construed as limiting in any way, as other embodiments may include other features than the ones listed above.

BRIEF DESCIPTION OF THE DRAWINGS

Fig. 1 is a block diagram of a radar device according to an embodiment.

Fig. 2 is a flow chart illustrating a method according to an embodiment.

Fig. 3 is a block diagram illustrating a phase-locked loop usable in some embodiments.

Fig. 4 illustrates a signal for illustrating some embodiments.

Fig. 5A illustrates synthetic aperture radar images according to a comparative example, and Fig. 5B illustrates synthetic aperture radar images obtained with techniques according to some embodiments.

DETAILED DESCRIPTION

In the following, various embodiments will be discussed in detail referring to the attached drawings. These embodiments are given by way of example only and are not to be construed as limiting. For example, while embodiments may include a plurality of features (components, elements, acts, events, steps and the like), in other embodiments some of these features may be omitted or may be replaced by alternative features. In addition to the features explicitly shown and described, additional features may be provided, for example features used in conventional radar devices. Details of various components like filters, amplifiers and the like may be provided in any conventional manner. Features from different embodiments may be combined to form further embodiments. Variations, modifications and details describes with respect to one of the embodiments are also applicable to other embodiments and therefore will not be described repeatedly.

Connections or couplings shown in the drawings or described herein refer to electrical connections or couplings unless noted otherwise. Such connections or couplings may be modified, for example by adding elements or removing elements, as long as the general function of the connection or coupling, for example to provide a certain signal to provide a voltage or current etc. is essentially maintained.

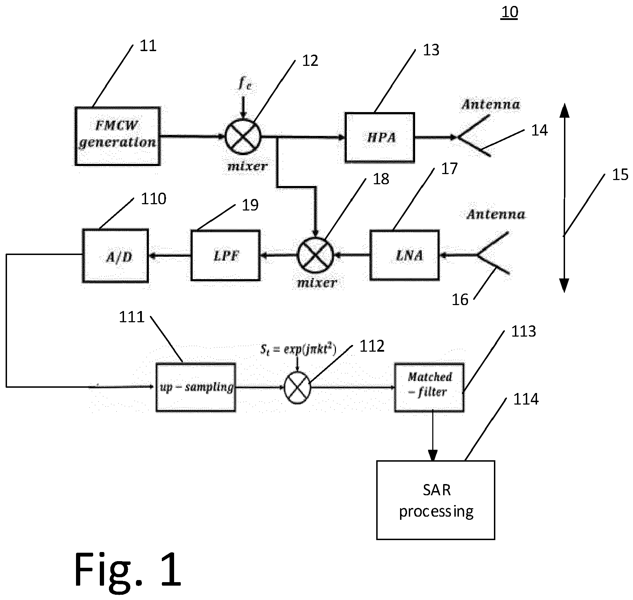

Fig. 1 is a block diagram of a frequency modulation continuous wave (FMCW) synthetic aperture radar (SAR) device 10 according to an embodiment.

Elements 11 to 14 of SAR device 10 illustrates a transmit path for transmitting radar signals, and elements 16 to 114 illustrate a receive path for receiving radar signals.

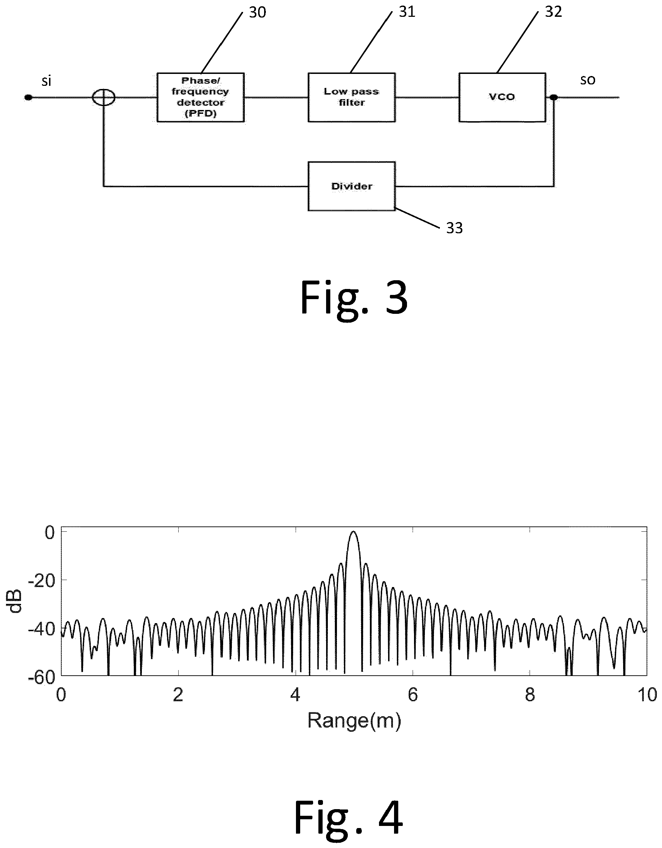

The transmit path of SAR device 10 includes an FMCW generation block 11 which generates a signal with varying frequency, for example linear frequency ramps as common for radar chirps. For controlling the generated frequency, for example a phase-locked loop (PLL) may be used in FMCW generation block 11. An example PLL is shown in Fig. 3. A phase frequency detector (PFD) 30 detects phase deviation between a reference input signal si, for example generated by a quartz oscillator, and an output signal so output by the PLL and divided by a divider 33. An output of phase frequency detector 30 is low pass filtered in a low pass filter 31 and controls a voltage controlled oscillator (VCO) 32, which generates output signal so. In this way, the frequency of output signal so is regulated to the frequency of reference input signal si multiplied by a divider factor of divider 33. By varying the divider factor, the frequency of output signal so may be varied in a desired manner. In other embodiments, the frequency of reference input signal si may be varied, to generate a corresponding variation in output signal so. In other embodiments, instead of a phase-locked loop a direct digital synthesis (DDS) may be used to generate a frequency modulated signal in FMCW generation block 11.

The signal thus generated is mixed with a carrier frequency $f_c$ in a mixer 12, to generate an FMCW radar signal to be transmitted. An output of mixer 12 is high-pass filtered and amplified in a high-pass filter/amplifier 13 and provided to an antenna 14 for transmission.

Radar signals transmitted from antenna 14 and reflected from one or more objects may be received by a receive antenna 16. Antennas 14, 16 are examples for antenna arrangements comprising one or more antennas, which may be moving or stationary. In the latter case, antennas may be used sequentially. Therefore, the term antenna arrangement as used herein refers to one or more antennas, which are arranged or configured for SAR radar measurements. As indicated by an arrow 15, for synthetic aperture radar processing, antennas 14, 16 are moveable. Instead of physically moving antennas, also an antenna array with a plurality of antennas in corresponding spatial positions which are used sequentially may be provided. The received radar signal is amplified by low noise amplifier (LNA) 17 and mixed in a mixer 18 with the FMCW radar signal to be transmitted as output by mixer 12. This essentially provides a down conversion to the baseband, i.e. the band of FMCW generation block 11. High frequency components are filtered out by a low pass filter 19.

In particular, a transmitted linear FMCW radar signal (i.e. with linear frequency ramp), may be defined as:

$$S_t(t) = A \cos(\phi(t)). \, rect\left(\frac{t - T/2}{T}\right)$$

$$\phi(t) = 2\pi f_c t + \pi k t^2$$

wherein $S_t(t)$ is the transmitted signal, A represents an amplitude, rect defines a rectangular window, and k = B/T is the chirp rate defined as the ratio of bandwidth B to pulse duration T. The received signal is an attenuated replica of

the transmitted signal reflected of a target located at a range R and may be written as

$$S_r(t) = A' \cos(\phi(t)). \, rect\left(\frac{t - \tau - T/2}{T}\right)$$

$$\tau = \frac{2R}{c}$$

wherein $S_r(t)$ is the received signal and A' is the amplitude of the received signal, and c is the speed of light.

Mixing the received and amplified signal in mixer 18 with the output of mixer 12 results in a signal $S_{if}(t)$ that may be written as

$$S_{if}(t) = S_t(t).S_r(t) = AA' \cos(\phi(t - \tau)). \cos(\phi(t)). \, rect\left(\frac{t - \tau - T/2}{T}\right)$$

After low pass filtering in low pass filter 19 a signal with a so called beat frequency remains, which may be written as

$$S_B(t) = \frac{AA'}{2} \cos(\phi(t - \tau) - \phi(t)). \, rect\left(\frac{t - \tau - T/2}{T}\right)$$

wherein $S_B(t)$ essentially represents the signal after low pass filtering.

This signal is then converted to a stream of digital samples by an analog-to-digital converter 110. Any suitable type of analog-to-digital converter may be used.

Components 111 to 114 represent a digital processing of the signal. This digital processing may be performed by any suitable digital signal processing circuitry, for example a digital signal processor (DSP), a microprocessor or microcontroller programmed accordingly, or an application specific intergraded circuit designed to perform the functions described.

The digital processing essentially performs a reconstruction which is basically an inverse chirping operation performed using the beat frequency mentioned above.

Up to analog-to-digital converter 110, the processing essentially corresponds to conventional stretch processing. Similar to conventional stretch processing, the sampling rate of analog-to-digital converter 110 can be comparatively low compared to conventional matched filter architectures. For example, for FMCW bandwidth of 1GHz, the sampling frequency of analog-to-digital converter 110 may be of the order of 20MHz.

In the digital domain, an upsampling function 111 is performed, to obtain a higher number of samples while maintaining its length with respect to time to enable other vectorial operations such as multiplication. Following the upsampling, the stream of digital sample is multiplied with a function $S_m(t) = \exp(j\pi k t^2)$, where k is defined as above, j is the imaginary unit and exp is the exponential function. Therefore, $S_m(t)$ represents the linear frequency modulated signal as output by FMCW generation block 11. The result is a reconstructed signal $S_{rec}$ which may be written as

$$S_{rec}(t) = S_{if}(t).S_m(t) = S_r(t).S_t^*(t).S_t(t)$$
$$= AA'C(t - \tau).\exp\big(\phi(t - \tau)\big).rect\left(\frac{t - \tau - T/2}{T}\right)$$

Therefore, by the multiplication the received chirps are recovered from the signal $S_{if}(t)$, which has the beat frequency. This reconstructed signal is a delayed and attenuated replica of the transmitted signal. The thus generated reconstructed signal is subjected to matched filtering at using a matched filter 113. In embodiments, the matched filtering corresponds to a cross correlation with the transmitted signal to remove interference and detect the ranges of the targets.

Fig. 4 illustrates an example of such a cross correlation of the reconstructed received signal after multiplier 112 with the transmitted signal, where the highest peak is indicative of the range of the target. The output of matched filter 113 is then subjected to SAR processing based on the movement of antennas 14, 16, essentially as in conventional SAR processing using matched filter architectures. The SAR processing may for example use a circular global back projection algorithm, as discussed for example in D. Oloumi, "Ultra-wideband Synthetic Aperture Radar Imaging: Theory and Applications", PhD Thesis, University of Alberta, 2016.

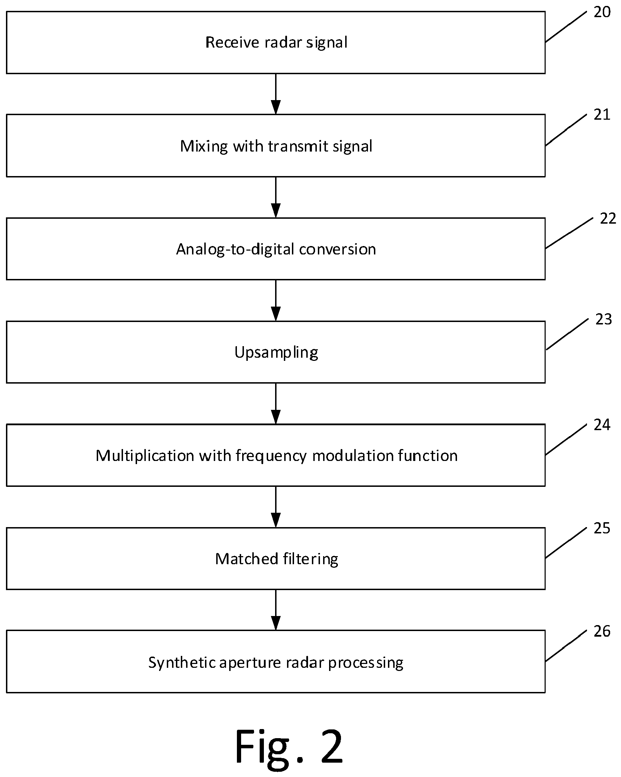

Fig. 2 is a flow chart of a method according to an embodiment, which illustrates receiving and processing radar signals. The method of Fig. 2 may be implemented using SAR device 10 of Fig. 1, and to avoid repetitions the method of Fig. 2 will be described referring to the description of SAR device 10 above. However, the method of Fig. 2 may also be implemented in other FMCW SAR devices.

At 20, the method comprises receiving an FMCW radar signal, in Fig. 1 at antenna 16, using a moving antenna. At 21, the method comprises mixing with a FMCW radar signal to be transmitted, corresponding to the function of mixer 18. This may be followed by low pass filtering, as performed by low pass filter 19 in Fig. 1. At 22, the method comprises an analog-to-digital conversion, as explained with respect to analog-to-digital converter 10. In a following digital processing, an upsampling as explained for upsampling function 111, a multiplication with a function describing the frequency modulation of the transmitted radar signal as described for multiplier 112 and a matched filtering as explained for matched filter 113 is performed. Finally, the method of Fig. 2 comprises synthetic aperture radar processing at 26, as explained for SAR processing function 114 of Fig. 1.

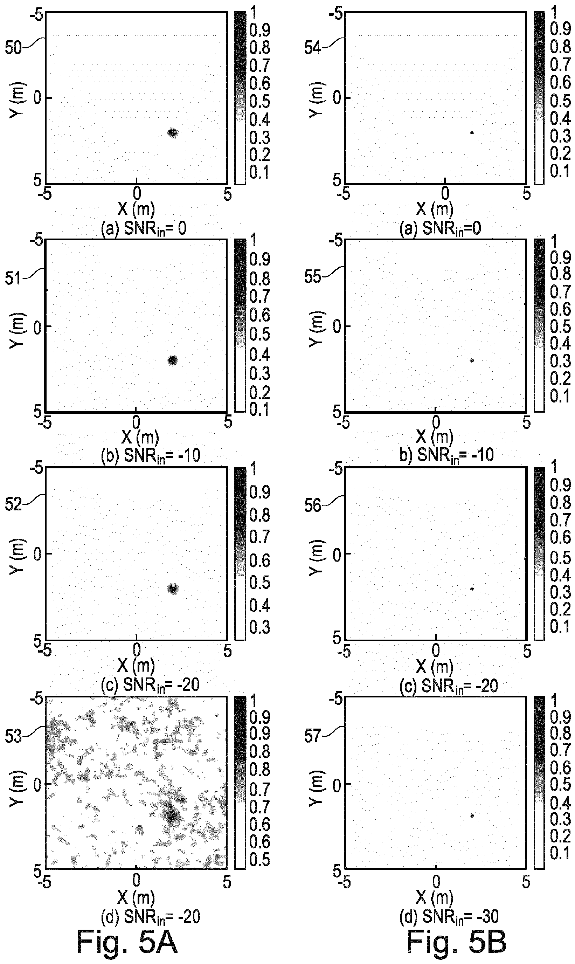

To illustrate effects of some embodiments, Fig. 5A illustrates SAR processing results for a conventional stretch architecture, i.e. where the SAR processing is performed based on the digital samples output from an analog-to-digital converter, that is beat frequency, like converter 110, without the digital processing 111 to 113, and Fig. 5B shows examples obtained with a SAR device like SAR device 10 of Fig. 1. In the examples, a target to be detected was located at $(x, y) = (2, -2)$, the bandwidth of the radar was 1GHz and chirp duration time was 10 $\mu$s. Graphs 50 and 54 show results for an input signal-to-noise ratio $SNR_{in}$ of 0, graphs 51 and 55 with for an input signal-to-noise ratio of -10 dB, graphs 52 and 56 for an input signal-to-noise ratio of -20 dB and graphs 53 and 57 for an input signal-to-noise ratio of -30dB. As can be seen, in embodiments as in Fig. 5B a better signal-to-noise ratio is obtained. For example, the compression gain in the conventional examples of Fig. 5A may be between 37 and 33 dB, where as in the embodiment example of Fig. 5B it may be between 48 and 49 dB. Therefore, by using techniques as discussed herein, SAR devices with a better signal-to-noise ratio then conventional stretch architectures may be obtained, while still enabling the use of an analog-to-digital converter with a lower sampling rate than conventional matched filter architectures.

Some embodiments are defined by the following examples:

Example 1. A synthetic aperture radar, SAR, device comprising: a transmit path configured to transmit a frequency modulated continuous wave, FMCW, radar signal, and a receive path comprising:

an antenna arrangement including an output configured to provide a received radar signal,
a mixer, wherein a first input of the mixer is coupled to the output of the antenna arrangement and a second input of the mixer is coupled to the transmit path to receive the FMCW radar signal to be transmitted,
an analog-to-digital converter, wherein an input of the analog-to-digital converter is coupled to an output of the mixer, and configured to provide a stream of digital samples, and
digital processing circuitry comprising:

an upsampling function configured to upsample the stream of digital samples,
a multiplication function configured to multiply the upsampled stream of digital samples with a function representing a frequency modulation of the FMCW radar signal to be transmitted to provide a reconstructed version of the received radar signal,

a matched filter function configured to provide matched filtering of the reconstructed signal, and
a SAR processing function configured to perform SAR processing on the matched filtered reconstructed signal.

Example 2. The SAR device of example 1, wherein the matched filter function is configured to perform a cross correlation of the reconstructed signal with the FMCW radar signal to be transmitted.

Example 3. The SAR device of example 1 or 2, wherein the function based on a frequency modulation of the FMCW radar signal to be transmitted is exp $(j\pi kt^2)$, wherein exp is the exponential function, j is the imaginary unit, t is the time and k = B/T, wherein B is the bandwidth of the transmitted FMCW radar signal and T is the pulse duration of each chirp of the FMCW radar signal to be transmitted.

Example 4. The SAR device of any one of examples 1 to 3, further comprising a low pass filter coupled between the mixer and the analog to digital converter.

Example 5. The SAR device of any one of examples 1 to 4, wherein the multiplication function is configured to provide the reconstructed signal as a reconstructed version of the received radar signal as delayed, amplitude scaled version of the FMCW radar signal to be transmitted.

Example 6. The SAR device of any one of examples 1 to 5, wherein the second input of the mixer is coupled to the transmit path to receive the FMCW radar signal to be transmitted after mixing with a carrier frequency.

Example 7. The SAR device of any one of examples 1 to 6, wherein the transmit path comprises a phase-locked loop for generating the frequency modulation of the FMCW radar signal to be transmitted.

Example 8. A method, comprising:

receiving a frequency modulated continuous wave, FMCW, radar signal,
mixing the received FMCW radar signal with an FMCW radar signal to be transmitted from a transmit path to provide a mixed signal,
converting the mixed signal to a stream of digital samples, upsampling the stream of digital samples,
multiplying the upsampled stream of digital samples with a function representing a frequency modulation of the FMCW radar signal to be transmitted to provide a reconstructed signal,
matched filtering of the reconstructed signal; and synthetic aperture radar processing of the matched filtered reconstructed signal.

Example 9. The method of example 8, wherein the matched filtering function performs a cross correlation of the reconstructed signal with the FMCW radar signal to be transmitted.

Example 10. The method of example 8 or 9, wherein the function based on a frequency modulation of the transmit signal is exp$(j\pi kt^2)$, wherein exp is the exponential function, j is the imaginary unit, t is the time and k = B/T, wherein B is the bandwidth of the FMCW radar signal to be transmitted and T is the pulse duration of each chirp of the FMCW radar signal to be transmitted.

Example 11. The method of any one of examples 8 to 10, further comprising low pass filtering of the mixed signal prior to the analog to digital conversion.

Example 12. The method of any one of examples 8 to 11, wherein the multiplying provides the reconstructed signal a reconstructed version of the received radar signal as delayed, amplitude scaled version of the FMCW radar signal to be transmitted.

Example 13. The method of any one of examples 8 to 12, wherein FMCW radar signal to be transmitted is a signal after mixing with a carrier frequency.

Example 14. The method of any one of examples 8 to 13, further comprising generating the frequency modulation of the FMCW radar signal to be transmitted using a phase-locked loop.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

**Claims**

1. A synthetic aperture radar, SAR, device (10) comprising:

   a transmit path configured to transmit a frequency modulated continuous wave, FMCW, radar signal, and
   a receive path comprising:

   an antenna arrangement (16) including an output configured to provide a received radar signal,
   a mixer (18), wherein a first input of the mixer (18) is coupled to the output of the antenna arrangement (16) and a second input of the mixer (18) is coupled to the transmit path to receive the FMCW radar signal to be transmitted,
   an analog-to-digital converter (110), wherein an input of the analog-to-digital converter (110) is coupled to an output of the mixer (18), and configured to provide a stream of digital samples, and
   digital processing circuitry comprising:

   an upsampling function (111) configured to upsample the stream of digital samples,
   a multiplication function (112) configured to multiply the upsampled stream of digital samples with a function representing a frequency modulation of the FMCW radar signal to be transmitted to provide a reconstructed version of the received radar signal,
   a matched filter function (113) configured to provide matched filtering of the reconstructed signal, and
   a SAR processing function (114) configured to perform SAR processing on the matched filtered reconstructed signal.

2. The SAR device (10) of claim 1, wherein the matched filter function is configured to perform a cross correlation of the reconstructed signal with the FMCW radar signal to be transmitted.

3. The SAR device (10) of claim 1 or 2, wherein the function based on a frequency modulation of the FMCW radar signal to be transmitted is $\exp(j\pi kt^2)$, wherein exp is the exponential function, j is the imaginary unit, t is the time and k = B/T, wherein B is the bandwidth of the transmitted FMCW radar signal and T is the pulse duration of each chirp of the FMCW radar signal to be transmitted.

4. The SAR device (10) of any one of claims 1 to 3, further comprising a low pass filter (19) coupled between the mixer (18) and the analog to digital converter (110).

5. The SAR device (10) of any one of claims 1 to 4, wherein the multiplication function is configured to provide the reconstructed signal as a reconstructed version of the received radar signal as delayed, amplitude scaled version of the FMCW radar signal to be transmitted.

6. The SAR device (10) of any one of claims 1 to 5, wherein the second input of the mixer (18) is coupled to the transmit path to receive the FMCW radar signal to be transmitted after mixing with a carrier frequency.

7. The SAR device (10) of any one of claims 1 to 6, wherein the transmit path comprises a phase-locked loop for generating the frequency modulation of the FMCW radar signal to be transmitted.

8. A method, comprising:

   receiving a frequency modulated continuous wave, FMCW, radar signal,
   mixing the received FMCW radar signal with an FMCW radar signal to be transmitted from a transmit path to provide a mixed signal,
   converting the mixed signal to a stream of digital samples, upsampling the stream of digital samples,
   multiplying the upsampled stream of digital samples with a function representing a frequency modulation of the FMCW radar signal to be transmitted to provide a reconstructed signal,

matched filtering of the reconstructed signal; and
synthetic aperture radar processing of the matched filtered reconstructed signal.

9. The method of claim 8, wherein the matched filtering function performs a cross correlation of the reconstructed signal with the FMCW radar signal to be transmitted.

10. The method of claim 8 or 9, wherein the function based on a frequency modulation of the transmit signal is $\exp(j\pi kt^2)$, wherein exp is the exponential function, j is the imaginary unit, t is the time and k = B/T, wherein B is the bandwidth of the FMCW radar signal to be transmitted and T is the pulse duration of each chirp of the FMCW radar signal to be transmitted.

11. The method of any one of claims 8 to 10, further comprising low pass filtering of the mixed signal prior to the analog to digital conversion.

12. The method of any one of claims 8 to 11, wherein the multiplying provides the reconstructed signal a reconstructed version of the received radar signal as delayed, amplitude scaled version of the FMCW radar signal to be transmitted.

13. The method of any one of claims 8 to 12, wherein FMCW radar signal to be transmitted is a signal after mixing with a carrier frequency.

14. The method of any one of claims 8 to 13, further comprising generating the frequency modulation of the FMCW radar signal to be transmitted using a phase-locked loop.

Fig. 1

| Receive radar signal | 20 |
|---|---|

$\downarrow$

| Mixing with transmit signal | 21 |
|---|---|

$\downarrow$

| Analog-to-digital conversion | 22 |
|---|---|

$\downarrow$

| Upsampling | 23 |
|---|---|

$\downarrow$

| Multiplication with frequency modulation function | 24 |
|---|---|

$\downarrow$

| Matched filtering | 25 |
|---|---|

$\downarrow$

| Synthetic aperture radar processing | 26 |
|---|---|

# Fig. 2

# Fig. 3

# Fig. 4

(a) SNR$_{in}$= 0

(b) SNR$_{in}$= -10

(c) SNR$_{in}$= -20

(d) SNR$_{in}$= -20

Fig. 5A

(a) SNR$_{in}$=0

(b) SNR$_{in}$= -10

(c) SNR$_{in}$= -20

(d) SNR$_{in}$= -30

Fig. 5B

Europäisches
Patentamt

European
Patent Office

Office européen
des brevets

# EUROPEAN SEARCH REPORT

Application Number

EP 21 19 8012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SOUMEKH M: "SAR-ECCM using phase-perturbed LFM chirp signals and DRFM repeat jammer penalization", 2005 IEEE INTERNATIONAL RADAR CONFERENCE RECORD : 9 - 12 MAY 2005, CRYSTAL GATEWAY MARRIOTT, ARLINGTON, VIRGINIA, USA, IEEE SERVICE CENTER, PISCATAWAY, NJ, 9 May 2005 (2005-05-09), pages 507-512, XP010801752, ISBN: 978-0-7803-8881-9 * sec. 1, 2 * ----- | 1-14 | INV. G01S7/35 G01S13/34 |
| X | SOUMEKH MEHRDAD ET AL: "Signal processing of wide bandwidth and wide beamwidth P-3 SAR data", IEEE TRANSACTIONS ON AEROSPACE AND ELECTRONIC SYSTEMS., vol. 37, no. 4, 1 October 2001 (2001-10-01), pages 1122-1141, XP055898292, US ISSN: 0018-9251, DOI: 10.1109/7.976954 Retrieved from the Internet: URL:https://ieeexplore.ieee.org/stampPDF/g etPDF.jsp?tp=&arnumber=976954&ref=aHR0cHM6 Ly9pZWVleHBsb3JlLmllZWUub3JnL2Fic3RyYWN0L2 RvY3VtZW50Lzk3Njk1NA==> * figure 4a * ----- | 1,8 | |
| A | US 10 330 786 B1 (MUSGROVE CAMERON [US]) 25 June 2019 (2019-06-25) * column 4, line 30 - column 4, line 57; figure 2 * ----- | 1-14 | TECHNICAL FIELDS SEARCHED (IPC) G01S |
| A | US 3 898 660 A (MUNSTER ALLEN C) 5 August 1975 (1975-08-05) * figure 1 * ----- | 1-14 | |

The present search report has been drawn up for all claims

| Place of search | Date of completion of the search | Examiner |
|---|---|---|
| Munich | 7 March 2022 | Rudolf, Hans |

EPO FORM 1503 03.82 (P04C01)

## ANNEX TO THE EUROPEAN SEARCH REPORT
## ON EUROPEAN PATENT APPLICATION NO.

EP 21 19 8012

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2022

| Patent document cited in search report | | Publication date | Patent family member(s) | Publication date |
|---|---|---|---|---|
| US 10330786 | B1 | 25-06-2019 | NONE | |
| US 3898660 | A | 05-08-1975 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. W. TING ; D. OLOUMI ; K. RAMBABU.** FMCW SAR System for near-distance imaging applications - practical considerations and calibrations. *IEEE Transactions on Microwave Theory and Techniques,* 2017, vol. 66 (1), 450-461

- Ultra-wideband Synthetic Aperture Radar Imaging: Theory and Applications. **D. OLOUMI.** PhD Thesis. University of Alberta, 2016